# EUROPÄISCHE PATENTANMELDUNG

(11) **EP 1 184 234 A2**
(43) Veröffentlichungstag der Anmeldung: **06.03.2002**
(21) Anmeldenummer: 01120313.0
(22) Anmeldetag: 24.08.2001
(51) Int. Cl.: B60R 21/20

(54) **Dachverkleidung für einen Innenraum eines Fahrzeuges mit einem Seitenaufprallschutz**

(30) Priorität: 30.08.2000 DE 10042419
(71) Anmelder: DaimlerChrysler AG, 70567 Stuttgart (DE)
(72) Erfinder: Breymaier, Karl, 89250 Senden/Iller (DE)

(57) **Zusammenfassung**

Es wird eine Dachverkleidung für einen Innenraum eines Fahrzeuges, insbesondere eines Kraftfahrzeuges, vorgeschlagen. Die Dachverkleidung weist ein an einem Dachrahmen (1) des Fahrzeuges angeordnetes Verkleidungsteil (2) auf, unter dem ein Seitenaufprallschutz (9) für einen Insassen vorgesehen ist, wobei in einem Fall einer Aktivierung des Seitenaufprallschutzes (9) an dem Verkleidungsteil (2) eine Öffnung zum Austreten des Seitenaufprallschutzes (9) vorgesehen ist. Bei der Dachverkleidung ist erfindungsgemäß an dem Verkleidungsteil (2) eine Biegeachse (17) vorgesehen, die durch einen eine geringere Materialdichte als die angrenzenden Bereiche aufweisenden länglich ausgebildeten Abschnitt an dem Verkleidungsteil gebildet ist.

## Beschreibung

Die Erfindung betrifft eine Dachverkleidung für einen Innenraum eines Fahrzeuges, insbesondere eines Kraftfahrzeuges nach der im Oberbegriff des Patentanspruchs 1 näher genannten Art.

Üblicherweise ist eine derartige Dachverkleidung an einem Dachrahmen in einem Innenraum eines Fahrzeuges befestigt. Die bekannte Dachverkleidung wird gewöhnlicherweise bei Kraftfahrzeugen als Himmel bezeichnet.

Eine solche aus der Praxis bekannte Dachverkleidung weist zumindest ein Verkleidungsteil auf, welches den Dachrahmen bzw. das Dach des Kraftfahrzeuges von innen her verkleidet. Das Verkleidungsteil ist an dem Dachrahmen des Kraftfahrzeuges angeordnet. Dazu können beispielsweise Halteelemente vorgesehen sein, die das Verkleidungsteil an verschiedenen Bereichen des Dachrahmens befestigen. Insbesondere der Randbereich des Verkleidungsteiles muß ausreichend mit dem Dachrahmen verbunden werden, ansonsten könnte unter Umständen der Fall eintreten, daß das Verkleidungsteil am Randbereich für den Insassen des Fahrzeuges störend herunter hängt.

Im Zuge weiterer Verbesserungen des Insassenschutzes ist in einem Kraftfahrzeug allgemein vorgesehen, daß sogenannte Aufprallschutzeinrichtungen in dem Fahrzeug vorhanden sind. Insbesondere bei einem Seitenaufprall sind die Insassen des Kraftfahrzeuges höchst gefährdet. Deshalb werden die Fahrzeuge in bekannter Weise unter anderem z.B. mit einem Seitenaufprallschutz für den Insassen ausgestattet.

Aus der DE 296 03 316 U1 ist ein derartiger Seitenaufprallschutz bekannt. Der Seitenaufprallschutz weist einen aufblasbaren als Kopf-Gassack ausgebildeten Airbag auf, der beispielsweise mittels eines Gasgenerators im Fall einer Kollision mit Gas befüllbar ist. Der Seitenaufprallschutz ist in die Dachverkleidung integriert, welche einen zwischen dem Dachrahmen und dem Verkleidungsteil gebildeten Hohlraum aufweist. In diesem Hohlraum ist der Seitenaufprallschutz mit dem Gassack untergebracht. Somit ist der Seitenaufprallschutz unter dem Verkleidungsteil der Dachverkleidung angeordnet.

Im Fall einer Aktivierung des Seitenaufprallschutzes soll der Gassack aufgrund seines Entfaltungsvorgangs durch das Verkleidungsteil der bekannten Dachverkleidung austreten und sich schützend zwischen dem Seitenfenster des Kraftfahrzeuges und den Insassen entfalten. Um dem Gassack die Möglichkeit zu geben durch das Verkleidungsteil auszutreten, ist an dem Verkleidungsteil an geeigneter Stelle eine Schwächung der Verkleidung in Form einer u-förmigen Kerbe (Sollbruchstelle) vorgesehen. Bei einer bevorstehenden Kollision des Kraftfahrzeuges wird der Seitenaufprallschutz durch entsprechende Detektoren ausgelöst. Dadurch wird der Gassack mittels dem Gasgenerator mit Gas gefüllt. Aufgrund des Entfaltungsvorganges kann der Gassack das Verkleidungsteil der Dachverkleidung entlang der vorgesehenen Schwächung aufklappen, so daß der Gassack sich vollständig im Innenraum des Kraftfahrzeuges zwischen dem Seitenfenster und dem Insassen entfalten kann.

Die Schwächung der bekannten Verkleidung durch eine u-förmige Kerbe bringt den Nachteil mit sich, daß das Material der Verkleidung beim Einbringen der Kerbe zumindest teilweise zerstört wird. Dadurch besteht die Gefahr, daß aufgrund des beim Entfaltungsvorgang des Gassacks sich entwickelnden Druckes Teile der Verkleidung abreißen und in den Innenraum des Kraftfahrzeuges geschleudert werden, wobei sie Insassen verletzen können.

Der Erfindung liegt vor diesem Hintergrund die Aufgabe zugrunde, eine Dachverkleidung für einen Innenraum eines Fahrzeuges, insbesondere für ein Kraftfahrzeug der eingangs genannten Art zu schaffen, welche hinsichtlich der Sicherheit der Insassen des Fahrzeuges weiter verbessert ist.

Erfindungsgemäß wird diese Aufgabe durch eine Dachverkleidung gemäß den Merkmalen des Patentanspruchs 1 gelöst. Demnach zeichnet sich die Erindung dadurch aus, daß sie eine Dachverkleidung für einen Innenraum eines Fahrzeuges, insbesondere eines Kraftfahrzeuges, mit einem an einem Dachrahmen des Fahrzeuges angeordneten Verkleidungsteil, unter dem ein Seitenaufprallschutz für einen Insassen vorgesehen ist, wobei in einem Fall einer Aktivierung des Seitenaufprallschutzes an dem Verkleidungsteil eine Öffnung zum Austreten des Seitenaufprallschutzes vorgesehen ist und wobei im Verkleidungsteil eine Biegeachse vorgesehen ist aufweist. Die Biegeachse der Erfindung ist durch einen eine geringere Materialdichte als die angrenzenden Bereiche aufweisenden länglich ausgebildeten Abschnitt an dem Verkleidungsteil gebildet.

Die erfindungsgemäße Dachverkleidung bietet den Vorteil, daß das Verkleidungsteil bei der Aktivierung des Seitenaufprallschutzes sicher um eine Biegeachse bewegbar ist, ohne das es abreißt. Somit wird eine definierte Öffnung der Dachverkleidung bzw. des Verkleidungsteils ermöglicht. Der Gassack bzw. der Kopf-Airbag des Seitenaufprallschutzes kann somit durch die an der erfindungsgemäßen Dachverkleidung durch Umbiegen bzw. Abklappen gebildete Öffnung austreten und sich entsprechend im Innenraum des Fahrzeuges entfalten, ohne daß dabei Abschnitte des Verkleidungsteiles der Dachverkleidung zerstört bzw. abgerissen werden. Die Tatsache, daß die Biegeachse durch einen eine geringer Materialdichte als die angrenzenden Bereiche aufweisenden länglich ausgebildeten Abschnitt an dem Verkleidungsteil gebildet ist, bringt den Vorteil mit sich, daß im Gegensatz zu einer Kerbe, wie sie aus dem Stand der Technik bekannt ist, das Material der Verkleidung nicht zerstört ist. Das bedeutet, daß die Verkleidung an dieser Stelle nur in seiner Formstabilität nicht jedoch in seiner sonstigen Festigkeit geschwächt wird. Auf diese Weise wird vermieden, daß die Verkleidung im Bereich der Biegeachse beim Öffnen des Airbags bricht und somit Teile der Verkleidung in den Fahrzeuginnenraum geschleudert werden.

Gemäß einer Weiterbildung der Erfindung ist dabei vorgesehen, daß die Verkleidung aus einem Faserverbundmaterial besteht, welches verpreßt wird, wobei der die Biegeachse bildende Abschnitt nicht oder nicht so stark gepreßt wird, wie die übrigen Bereiche der Verkleidung.

Die Verwendung von gepreßtem Fasermaterial hat den Vorteil, daß damit eine ausreichende Festigkeit für die Dachverkleidung insgesamt erreicht wird. Eine derartige Festigkeit, insbesondere des Verkleidungsteiles, ermöglicht vorzugsweise auch eine erfindungsgemäß vorgesehene freihängende Befestigung des Verkleidungsteiles bzw. der Dachverkleidung. Somit sind bei der erfindungsgemäßen Dachverkleidung lediglich z.B. in Quer- und/oder in Längsrichtung des Kraftfahrzeuges Halteelemente erforderlich, mit denen das Verkleidungsteil freihängend an dem Dachrahmen befestigbar ist.

Durch die konstruktiv einfache Ausgestaltung der Befestigung der erfindungsgemäßen Dachverkleidung wird auch eine einfache Montage der Dachverkleidung an dem Kraftfahrzeug ermöglicht. Insbesondere sind bei der erfindungsgemäßen Dachverkleidung keine zusätzlichen Abdeckungen bzw. Halteelemente, z.B. am Randbereich des Verkleidungsteiles, erforderlich.

In einer vorteilhaften Ausführung ist die Biegeachse etwa am Randbereich des Verkleidungsteils vorgesehen. Somit kann sich der Gassack des Seitenaufprallschutzes parallel zu einem Seitenfenster des Fahrzeuges im Fall einer Kollision entfalten. Dadurch kann sich der Gassack schützend zwischen dem Insassen und dem Seitenfenster des Fahrzeuges entfalten und dem Insassen somit bei einem Seitenaufprall des Fahrzeuges eine entsprechende Sicherheit geben.

Für die erfindungsgemäße Dachverkleidung ist vorzugsweise als Werkstoff ein Fasermaterial, wie z.B. Baumwollvlies, Hanf, Kenaf oder dergleichen vorgesehen.Bei diesen Fasermaterialien ergibt sich der Vorteil, daß diese beispielsweise hinsichtlich einer Verschmutzung und einer Abnutzung relativ unempfindlich sind. Weiterhin gehören die genannten Fasermaterielien in vorteilhafter Weise zu den sogenannten nachwachsenden Rohstoffen. Selbstverständlich sind auch andere Fasermaterialien aus anderen Rohstoffen einsetzbar.

Bei der erfindungsgemäßen Dachverkleidung ist durch die Verwendung einer Biegeachse am Verkleidungsteil eine einstückige Ausgestaltung desselben möglich. Dies hat den Vorteil, daß z.B. der Seitenaufprallschutz unsichtbar hinter dem Verkleidungsteil montiert ist, denn eine Sollbruchstelle, Reißnähte oder dergleichen sind bei dem Verkleidungsteil der erfindungsgemäßen Dachverkleidung nicht erforderlich. Darüber hinaus ergibt sich der Vorteil, daß durch die einstückige Ausbildung der Dachverkleidung der Montageaufwand bei Dachverkleidung minimiert wird. Dennoch ist es selbstverständlich auch denkbar, daß das Verkleidungsteil der erfindungsgemäßen Dachverkleidung mehrteilig ausgebildet ist.

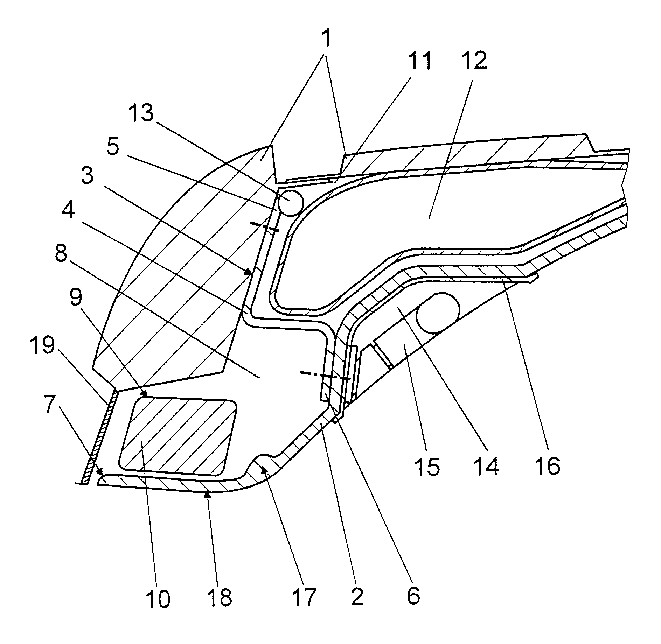

Weitere Vorteile und vorteilhafte Ausgestaltungen der Erfindung ergeben sich aus den Patentansprüchen und dem nachfolgend anhand der Zeichnung prinzipmäßig beschriebenen Ausführungsbeispiel.

Die einzige Figur der Zeichnung zeigt vereinfacht einen Ausschnitt einer erfindungsgemäß ausgestalteten Dachverkleidung eines Kraftfahrzeuges im Querschnitt.

In der Zeichnung ist ein Ausschnitt eines Daches eines als Kraftfahrzeug ausgebildeten Fahrzeuges geschnitten dargestellt. Das Dach weist einen Dachrahmen 1 auf, an dem die erfindungsgemäße Dachverkleidung für einen Innenraum des Kraftfahrzeuges befestigt ist.

Die Dachverkleidung besteht aus einem einer Fahrgastzelle zugewandten Verkleidungsteil 2, welches mittels eines Halteelements 3 an dem Dachrahmen 1 des Kraftfahrzeuges befestigt ist. Das Halteelement 3 ist als S-förmig geformter Halter 4 ausgebildet, wobei jeweils ein Ende 5 des Halters 4 mit dem Dachrahmen 1 und ein zweites Ende 6 des Halters 5 mit dem Verkleidungsteil 2 z.B. verschraubt ist.

Das Verkleidungsteil 2 der erfindungsgemäßen Dachverkleidung ist in sogenannter "freihängender" Art an dem Dachrahmen 1 angeordnet, wobei ein Rand 7 des Verkleidungsteils 2 lediglich formschlüssig an dem Dachrahmen 1 bzw. an einem Seitenfenster 19 des Kraftfahrzeuges anliegt. Somit sind am Rand 7 des Verkleidungsteiles 2 keine zusätzlichen Befestigungen vorgesehen.

Zwischen dem Dachrahmen 1 und dem Verkleidungsteil 2 wird ein Hohlraum 8 gebildet, in dem ein Seitenaufprallschutz 9 mit einem Gassack 10 bzw. Airbag und einem Gasgenerator angeordnet ist. In einem weiteren Hohlraum 11 sind bei diesem Ausführungsbeispiel ein Kanal 12 z.B. zur Luftversorgung des Innenraumes des Kraftfahrzeuges und ein Kabelkanal 13 z.B. für eine elektrische Verkabelung des Kraftfahrzeuges vorgesehen.

Das Verkleidungsteil 2 der erfindungsgemäßen Dachverkleidung weist eine Mulde 14 auf, in der ein klappbarer Haltegriff 15 vorgesehen ist. Der Haltegriff 15 ist an dem Verkleidungsteil 2 mittels des Halters 4 fest verbunden. Die Mulde 14 ist mit einer Schutzabdeckung 16 ausgekleidet, so daß beim Benutzen des Haltegriffs 15 das Verkleidungsteil 2 der Dachverkleidung vor starker Abnutzung geschützt wird.

Erfindungsgemäß ist an dem Verkleidungsteil 2 der Dachverkleidung eine Biegeachse 17 vorgesehen, so daß in einem Fall einer Aktivierung des Seitenaufprallschutzes 9 ein an die Biegeachse 17 angrenzender Bereich 18 des Verkleidungsteils 2 um die Biegeachse 17 bewegbar ist.

Somit ist ein definiertes Abbiegen bzw. Abklappen des Verkleidungsteils 2 durch den Entfaltungsvorgang des Gassackes 10 des Seitenaufprallschutzes 9 ermöglicht, wobei durch das Bewegen bzw. Abbiegen des an die Biegeachse 17 angrenzenden Bereiches 18 des Verkleidungsteils 2 eine Öffnung zum Austreten des Gassackes 10 des Seitenaufprallschutzes 9 gebildet wird. Die ausreichende Öffnung beim Ausklappen des Bereiches 18 des Verkleidungsteils 2 ist dabei so vorgesehen, so daß der Gassack 10 des Seitenaufprallschutzes 9 etwa parallel zu dem stark vereinfacht angeordneten Seitenfenster 19 des Fahrzeuges austreten kann. Somit kann sich der Gassack 10 etwa im Kopfbereich des Insassen des Kraftfahrzeuges entfalten und ihn entsprechend bei einem Seitenaufprall des Kraftfahrzeuges vor Verletzungen schützen.

Bei dem Verkleidungsteil 2 wird als Werkstoff z.B. ein Fasermaterial verwendet. Das Verkleidungsteil 2 ist hier mit Ausnahme der Biegeachse 17 aus einem festgepreßten Fasermaterial hergestellt, so daß eine für eine freihängende Befestigung der Dachverkleidung erforderliche Steifigkeit, insbesondere des Verkleidungsteiles 2, gegeben ist.

Der die Biegeachse 17 bildende Abschnitt ist im Vergleich zu den übrigen Bereichen der Verkleidung nicht oder nicht so stark verpreßt. Dies ist in der Zeichnung durch den nach oben hin ausgewölbten Abschnitt an der Biegeachse 17 dargestellt. Die Biegeachse 17 ist somit ein weniger formsteif bzw. formstabil, länglich ausgebildeter Abschnitt an dem Verkleidungsteil 2. Somit wird aufgrund des Entfaltungsvorganges des Gassackes 10 des Seitenaufprallschutzes 9 ein entsprechend leichtes Umbiegen des an die Biegeachse 17 angrenzenden Bereiches 18 des Verkleidungsteiles 2 ermöglicht, ohne daß dabei das Verkleidungsteil 2 zerstört wird. Durch das unterschiedlich starke Verpressen des Fasermaterials wird dies nicht zerstört, sondern erhält nur eine unterschiedliche Dichte und somit eine unterschiedliche Formstabilität.

## Patentansprüche

1. Dachverkleidung für einen Innenraum eines Fahrzeuges, insbesondere eines Kraftfahrzeuges, mit einem an einem Dachrahmen des Fahrzeuges angeordneten Verkleidungsteil, unter dem ein Seitenaufprallschutz für einen Insassen vorgesehen ist, wobei in einem Fall einer Aktivierung des Seitenaufprallschutzes an dem Verkleidungsteil eine Öffnung zum Austreten des Seitenaufprallschutzes vorgesehen ist und wobei im Verkleidungsteil (2) eine Biegeachse (17) vorgesehen ist,
**dadurch gekennzeichnet,**
**daß** die Biegeachse (17) durch einen eine geringere Materialdichte als die angrenzenden Bereiche aufweisenden länglich ausgebildeten Abschnitt an dem Verkleidungsteil (2) gebildet ist.

2. Dachverkleidung nach Anspruch 1,
**dadurch gekennzeichnet,**
**daß** durch ein Abklappen des an die Biegeachse (17) angrenzenden Bereiches (18) des Verkleidungsteils (2) die Öffnung zum Austreten eines Gassackes (10) des Seitenaufprallschutzes (9) realisierbar ist.

3. Dachverkleidung nach Anspruch 1 oder 2,
**dadurch gekennzeichnet,**
**daß** das Verkleidungsteil (2) mittels wenigstens einem Halteelement (3) freihängend an dem Dachrahmen (1) befestigt ist.

4. Dachverkleidung nach einem der Ansprüche 1 bis 3,
**dadurch gekennzeichnet,**
**daß** das Verkleidungsteil (2) aus einem festgepreßten Fasermaterial besteht, wobei der die Biegeachse (17) bildende Abschnitt nicht oder nicht so stark verpreßt wird, wie die übrigen Bereiche der Verkleidung.

5. Dachverkleidung nach Anspruch 4,
**dadurch gekennzeichnet,**
**daß** als Fasermaterial Baumwollfaservlies vorgesehen ist.

6. Dachverkleidung nach Anspruch 4,
**dadurch gekennzeichnet,**
**daß** als Fasermaterial Hanf vorgesehen ist.

7. Dachverkleidung nach Anspruch 4,
**dadurch gekennzeichnet,**
**daß** als Fasermaterial Kenaf vorgesehen ist.

8. Dachverkleidung nach einem der Ansprüche 1 bis 7,
**dadurch gekennzeichnet,**
**daß** die Biegeachse (17) an einem Randbereich (7) des Verkleidungsteils (2) derart vorgesehen ist, daß die beim Abklappen des Verkleidungsteils (2) gebildete Öffnung ausreichend dimensioniert ist, um den Gassack (10) des Seitenaufprallschutzes (9) etwa parallel zu einem Seitenfenster (19) des Fahrzeuges austreten zu lassen.
